# EUROPÄISCHE PATENTSCHRIFT

(11) **EP 1 533 179 B1**
(45) Veröffentlichungstag und Bekanntmachung des Hinweises auf die Patenterteilung: **11.02.2009**
(21) Anmeldenummer: 04025268.6
(22) Anmeldetag: 23.10.2004
(51) Int. Cl.: B60P 1/44

(54) **Hubladebühne**
Loading tailgate
Hayon élévateur

(30) Priorität: 21.11.2003 DE 20318124 U
(43) Veröffentlichungstag der Anmeldung: 25.05.2005
(73) Patentinhaber: MBB Palfinger GmbH, 27777 Ganderkesee (DE)
(72) Erfinder: Bley, Hubert, 49681 Garrel (DE)
(74) Vertreter: Möller, Friedrich

(56) Entgegenhaltungen:
- EP-A- 0 277 686
- EP-A- 0 724 080
- DE-A1- 3 228 765
- GB-A- 2 040 856
- GB-A- 2 312 197

## Beschreibung

Die Erfindung betrifft eine Hubladebühne zur Anordnung an einer Rückseite eines Fahrzeugs gemäß dem Oberbegriff des Anspruchs 1. Weiterhin betrifft die Erfindung eine Hubladebühne gemäß dem Oberbegriff des Anspruchs 10.

Derartige Hubladebühnen sind aus der Praxis bekannt (DE 3 228 765). Das Tragrohr ist in der Regel quer zur Fahrtrichtung des Fahrzeuges angeordnet und dient zur Lagerung einer Ladeplattform, die üblicherweise schwenkbar und anheb- bzw. absenkbar am Tragrohr gelagert ist. Zur Steuerung bzw. Regelung der Funktionen der Ladeplattform sind Motoren bzw. Druckmittelzylinder derselben über elektrische Leitungen mit einer Steuereinheit verbunden. Die elektrischen Leitungen bzw. Kabel werden in der Praxis von der Ladeplattform kommend entlang des Tragrohrs geführt. Vom Tragrohr verlaufen die Leitungen dann zu einer Bedieneinheit bzw. einer Steuereinheit. Die Verlegung der Leitungen bzw. Kabel ist mit einem nicht unerheblichen baulichen Aufwand verbunden.

Hiervon ausgehend liegt der Erfindung die Aufgabe zugrunde, Hubladebühnen der eingangs genannten Art weiter zu entwickeln, wenigstens jedoch dem Stand der Technik eine weitere Ausführungsform hinzuzufügen.

Eine Hubladebühne zur Lösung dieser Aufgabe weist die Merkmale des Anspruchs 1 auf. Demnach ist vorgesehen, dass eine Dichtkappe zum Verschließen von offenen Enden des Tragrohrs aus wenigstens zwei gelenkig, insbesondere scharnierartig, miteinander verbundenen Teilen besteht. Ein erstes Teil, insbesondere ein Halteteil, ist am Tragrohr befestigbar und weist eine Durchführung für wenigstens ein Kabel auf. Ein zweites Teil, insbesondere ein Deckel, ist derart gelenkig mit dem ersten Teil verbunden, dass er zum Verschluss des vom ersten Teil freigelassenen offenen Endes des Tragrohrs ausgebildet ist. Eine derartig ausgebildete Dichtkappe weist zahlreiche Vorteile auf. Durch die Befestigung des ersten Teils, insbesondere des Halteteils, am Tragrohr ist ein Verlust bzw. Abhandenkommen des die Öffnung verschließenden zweiten Teils, insbesondere des Deckels, auszuschließen. Bei den aus dem Stand der Technik bekannten in der Regel einteilig ausgebildeten Dichtkappen, die auf die offenen Enden des Tragrohrs aufgesteckt bzw. aufgeschoben werden, war ein ungewolltes Lösen der Dichtkappe vom Tragrohr nicht zu vermeiden. Ein weiterer Vorteil der gelenkigen Verbindung der beiden Teile der Dichtkappe besteht darin, dass der zweite Teil, insbesondere der Deckel, auch nach Entfernung vom offenen Ende des Tragrohrs noch mit diesem verbunden ist, nämlich über das erste Teil, insbesondere das Halteteil. Die aus dem Stand der Technik bekannten aufsteckbaren Dichtkappen wurden nach dem Abziehen vom Tragrohr beispielsweise im Bereich des Fahrzeugs auf den Boden gelegt und dort vergessen. Die Kabeldurchführung andererseits ermöglicht eine geordnete Verlegung der Kabel an der Außenseite des Tragrohrs, sowie eine gezielte Einführung der Kabel im Bereich des zweiten Teils, insbesondere des Deckels, in das Tragrohr hinein.

Vorzugsweise ist der zweite Teil, nämlich das Halteteil, wenigstens teilweise das Tragrohr umschließend an demselben positionierbar. Das Halteteil wird dabei vorzugsweise im Bereich bzw. in der Nähe des offenen Endes des Tragrohrs angeordnet. Dies kann lösbar erfolgen. Neben einer entsprechenden Befestigung, beispielsweise durch Schrauben, sind auch dauerhaftere Befestigungen des Halteteils am Tragrohr denkbar, beispielsweise durch Kleben oder Nieten, Schweißen oder dergleichen.

Zur Durchführung der Kabel, elektrischen Leitungen oder dergleichen kann das Halteteil Ausnehmungen aufweisen. Vorzugsweise können die Ausnehmungen an einer dem Tragrohr zugeordneten Seitenfläche des Halteteils angeordnet sein. Denkbar ist aber auch, dass die Kabel durch Durchbrüche in dem Halteteil hindurchgeführt werden. Vorzugsweise verlaufen die Ausnehmungen bzw. Durchbrüche in Längsrichtung der Kabel, wobei jedem Kabel bzw. jeder Leitung eine eigene bzw. gesonderte Ausnehmung zugeordnet sein kann. Die Ausnehmungen können in diesem Fall über den Querschnitt verteilt angeordnet sein, so dass die Kabel wenigstens in diesem Bereich sauber verlegt und gut zugänglich sind. Um den Bereich der Kabeldurchführung abzudichten kann das Halteteil aus Kunststoff ausgebildet sein. Es ist auch denkbar, dass das Halteteil im Bereich der Ausnehmungen aus einem Kunststoff mit erhöhter Flexibilität besteht, wohingegen andere Teile bzw. des Halteteils im übrigen aus einem steiferen Kunststoff besteht.

Der zweite Teil der Dichtkappe, nämlich ein Deckel, weist vorzugsweise eine mit der Querschnittsform des Tragrohrs korrespondierende Gestalt auf. Weiterhin vorzugsweise ist der Deckel zum Verschluss des offenen Endes des Tragrohrs schwenkbar an dem Halteteil befestigt. In diesem Fall kann der Deckel auf einfache Weise zwischen einer Schließstellung und einer geöffneten Stellung bewegt werden, ohne dass der Deckel komplett vom Tragrohr entfernt werden muss. In der Schließstellung sollte der Deckel das offene Ende des Tragrohrs vorzugsweise vollständig abdecken bzw. verschließen. Denkbar ist hierzu eine formschlüssige Anordnung des Deckels im Bereich des offenen Endes des Tragrohrs. Es ist aber auch denkbar, dass der Deckel das offene Ende nur im Wesentlichen verschließt und beispielsweise Bereiche zur Durchführung der Kabel bzw. Leitungen in das Innere des Tragrohrs frei bleiben. In einer bevorzugten Ausführungsform ist vorgesehen, dass der Deckel das offene Ende des Tragrohrs abdichtend verschließt und zu diesem Zweck aus einem flexiblen Material, beispielsweise einem weichen Kunststoff ausgebildet ist. Der Deckel kann wie das Halteteil auch aus mehreren unterschiedlichen Materialien bestehen, wobei lediglich in dem Bereich, der zur Anlage am Tragrohr kommt ein flexibles, abdichtendes Material vorgesehen ist. Vorzugsweise ist der Deckel in der Schließstellung derart angeordnet, dass das äußere Ende des Tragrohrs außenseitig umfasst wird. Zu diesem Zweck kann der Deckel einen umlaufenden Kragen aufweisen, der vorzugsweise formschlüssig an der Außenseite des Tragrohrs im Bereich eines offenen Endes anliegt. Als eine alternative Lösung ist denkbar, dass der Deckel in das offene Ende des Tragrohrs hineingesteckt wird, etwa in Art eine Stopfens.

Eine weitere Hubladebühne zur Lösung der eingangs genannten Aufgabe weist die Merkmale des Anspruchs 10 auf. Dabei kann es sich auch um eine Weiterentwicklung der vorstehend genannten Lösung handeln. Demnach ist vorgesehen, dass die Steuereinheit im Tragrohr angeordnet ist. Die Steuereinheit kann elektronische und/oder elektrische Bauteile zur Steuerung und/oder Regelung und/oder Anzeige und/oder Kontrolle von Funktionen der Hubladebühnen enthalten. Durch die Anordnung dieser Mittel im Tragrohr sind diese vor Umwelteinflüssen geschützt und dabei weiterhin gut zugänglich. Ein weiterer Vorteil dieser Lösung besteht darin, dass die Länge der Leitungen, die zur Verkabelung der Hubladebühne benötigt werden reduziert wird.

Die Steuereinheit ist vorzugsweise im Bereich von freien Enden des Tragrohrs angeordnet. Die Steuereinheit kann einer Dichtkappe zum Verschließen von offenen Enden des Tragrohrs zugeordnet sein. Bei der Dichtkappe kann es sich um die eingangs beschriebene erfindungsgemäße Dichtkappe handeln. Vorzugsweise ist die Steuereinheit derart an der Dichtkappe angeordnet, dass bei Anordnung der Dichtkappe am Tragrohr die Steuereinheit im (Inneren des) Tragrohrs angeordnet ist.

Weitere vorteilhafte Ausgestaltungen der erfindungsgemäßen Hubladebühnen ergeben sich aus den Unteransprüchen und der Beschreibung im übrigen.

Ein bevorzugtes Ausführungsbeispiel der Erfindung wird nachfolgend anhand der Zeichnung näher erläutert. In dieser zeigen:
- Fig. 1: eine Seitenansicht eines Fahrzeugs im Heckbereich mit einer Hubladebühne in Schließstellung,
- Fig. 2 und Fig. 3: eine an einem Tragrohr angeordnete Dichtkappe in Schließstellung in räumlicher Darstellung,

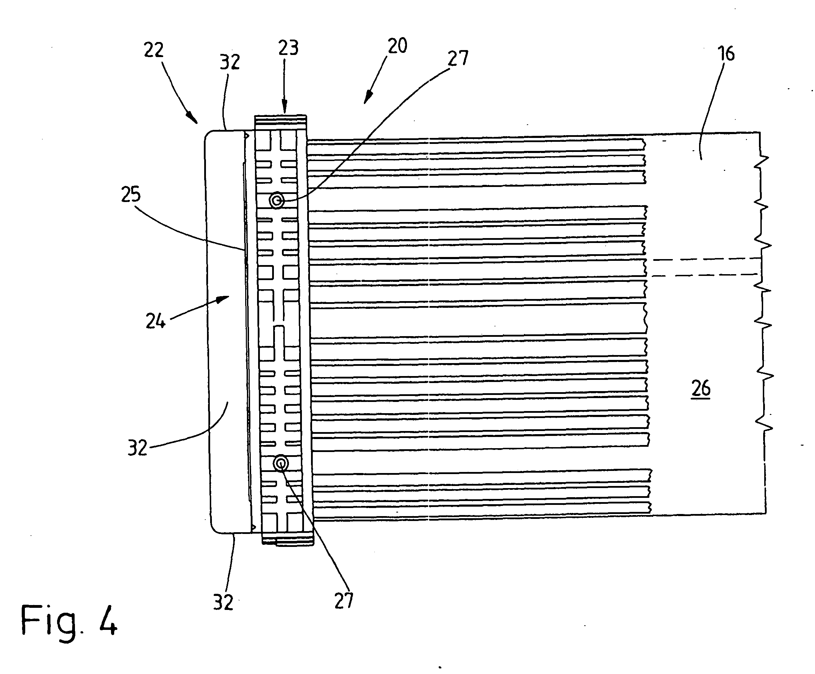

- Fig. 4: die Dichtkappe gemäß Fig. 3 in einer Seitenansicht,

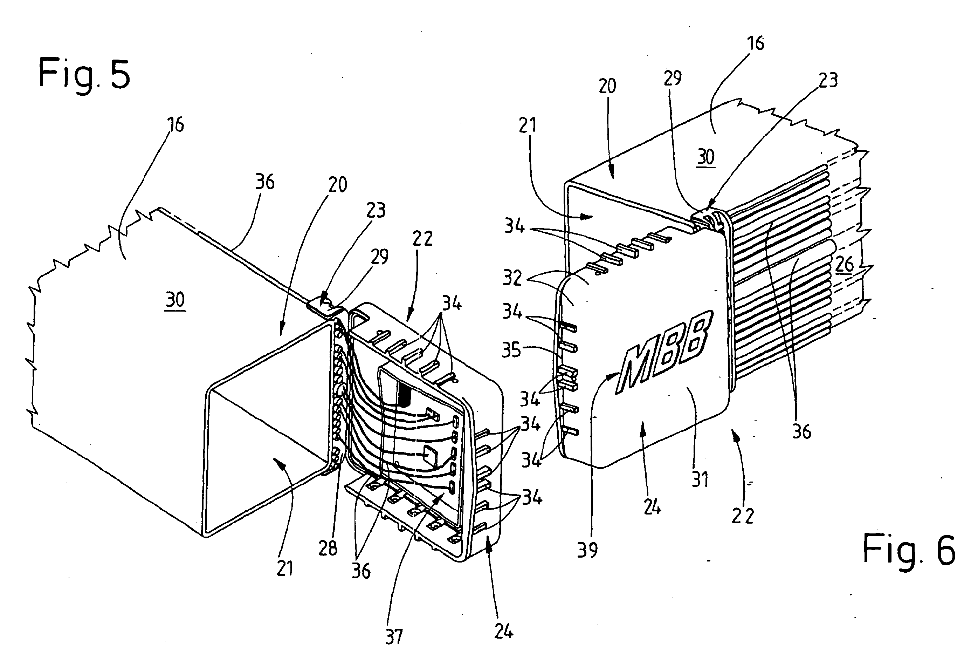

- Fig. 5 und Fig. 6: die Dichtkappe gemäß Fig. 2 und 3 in geöffneter Stellung,
- Fig. 7: die Dichtkappe gemäß Fig. 6 in einer Darstellung gemäß Fig. 4,

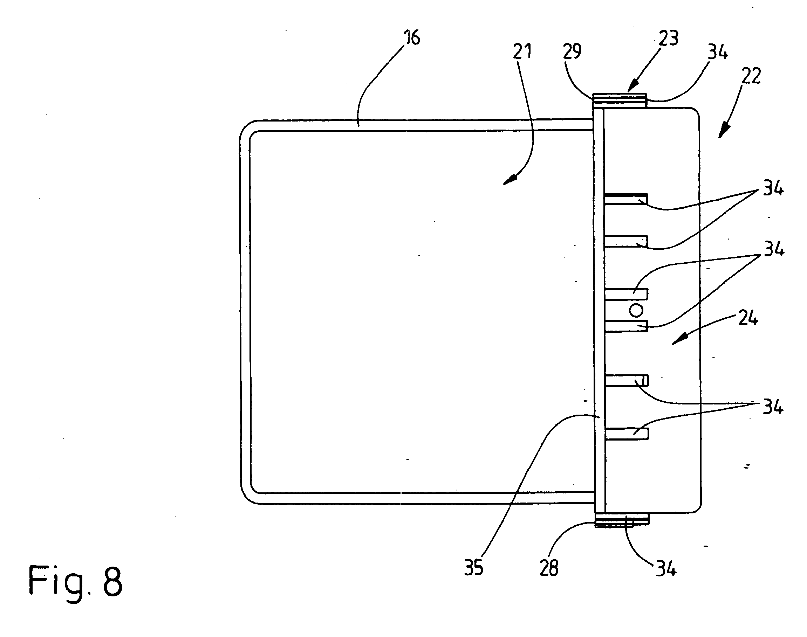

- Fig. 8: die Dichtkappe gemäß Fig. 5 und 6 in einer Seitenansicht mit Blick auf die Stirnseite des Tragrohrs.

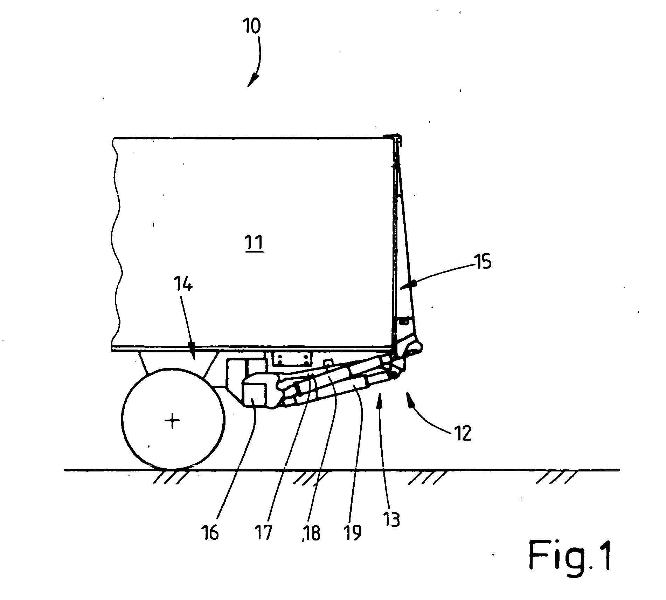

Fig. 1 zeigt ein Fahrzeug, nämlich einen Lastkraftwagen 10. Der Lastkraftwagen 10 verfügt über einen Aufbau 11, bei dem es sich um einen sogenannten Kofferaufbau mit einer vollständig offenen Rückseite handeln kann. Die übrigen Wandungen des Aufbaus können geschlossen ausgebildet sein. Der Rückseite des Lastkraftwagens 10 ist eine Hubladebühne 12 zugeordnet. Die in üblicher Weise ausgebildete Hubladebühne 12 verfügt über ein Hubwerk 13, das an einem Fahrwerksrahmen 14 des Lastkraftwagens 10 angeordnet ist. Das Hubwerk 13 trägt eine Ladeplattform 15, die in der in Fig. 1 gezeigten Schließstellung die offene Rückseite des Aufbaus 11 vollständig verschließt.

Das Hubwerk 13 verfügt über schwenkbar an einem quergerichteten Tragrohr 16 gelagerte Lenker 17, die mit der Ladeplattform 15 schwenkbar verbunden sind. Druckmittelzylinder 18, insbesondere Hydraulikzylinder, dienen zum Verschwenken der Ladeplattform 15 um eine horizontale Drehachse. Weitere Druckmittelzylinder 19, die vorzugsweise ebenfalls als Hydraulikzylinder ausgebildet sind, dienen zum Heben und Senken der Ladeplattform 15. Die Ladeplattform 15 ist damit über das Hubwerk 13 am Tragrohr 16 gelagert, welches seinerseits dem Fahrwerksrahmen 14 zugeordnet ist.

Das als Traverse dienende Tragrohr 16 verfügt über einen vorzugsweise durchgehenden Hohlraum, so dass seitliche freie Enden 20 des Tragrohrs 16 Öffnungen 21 aufweisen. Diese Öffnungen 21 können jeweils durch eine besonders ausgebildete Dichtkappe 22 verschlossen werden. Die Dichtkappe 22 besteht erfindungsgemäß aus wenigstens zwei Teilen, nämlich einem ersten Teil zur Befestigung der Dichtkappe 22 am Tragrohr 16 und einem zweiten Teil zum Verschließen der Öffnungen 21 im Bereich der freien Enden 20 des Tragrohrs 16. Das erste und das zweite Teil der Dichtkappe 22 sind gelenkig miteinander verbunden. Im Folgenden wird das erste Teil der Dichtkappe 22 zur Befestigung am Tragrohr 16 als Halteteil 23 bezeichnet. Das zweite Teil der Dichtkappe 22 zum Verschließen der Öffnungen 21 wird als Deckel 24 bezeichnet.

Der Deckel 24 ist in einem seitlichen Randbereich mit dem Halteteil 23 gelenkig verbunden. Im gezeigten Ausführungsbeispiel kommt hierzu eine Restverbindung, insbesondere ein Filmscharnier, zum Einsatz, das in Art eines Liniengelenks 25 ausgebildet ist. Der Deckel 24 ist auf diese Weise um das Liniengelenk 25 schwenkbar am Halteteil 23 angeordnet. Zum Verschließen der Öffnungen 21 kann der Deckel 24 um das Scharnier geschwenkt werden. Die scharnierartige Verbindung kann natürlich auch auf andere Weise ausgebildet sein. Im vorliegenden Fall, in dem die Dichtkappe 22 aus Kunststoff gebildet ist, kommt bevorzugt eine Restverbindung zum Einsatz.

Das Halteteil 23 ist an einer Seitenfläche 26 bzw. Seitenwand des Tragrohrs 16 befestigt. Hierzu kommen im vorliegenden Fall zwei Befestigungsmittel 27 zum Einsatz. Bei den Befestigungsmitteln 27 kann es sich um lösbare Befestigungsmittel 27 wie Schrauben oder dergleichen handeln. Alternativ können auch Nietverbindungen zur Befestigung des Halteteils 23 eingesetzt werden. Darüber hinaus kommen auch Klebeverbindungen oder dergleichen in Frage.

Das Halteteil 23 ist mit den Befestigungsmitteln 27 unmittelbar am freien Ende 20 des Tragrohrs 16 angeordnet, so dass das Halteteil 23 und das freie Ende 20 des Tragrohrs 16 außenseitig fluchtend angeordnet sind. Das Halteteil 23 ist im gezeigten Ausführungsbeispiel etwa U-förmig ausgebildet, mit einem Steg 28 der sich komplett über die Seitenfläche 26 des Tragrohrs 16 erstreckt und vorzugsweise an der Außenseite des Tragrohrs 16 anliegt. An freien Enden des Stegs 28 sind jeweils zwei kurze Flansche 29 angeordnet bzw. angeformt, die das Tragrohr 16 an zwei gegenüberliegenden Seitenflächen 30 umgreifen. Alternativ kann das Halteteil 23 das Tragrohr 16 auch in größerem Umfang oder auch vollständig umschließen.

Der schwenkbar am Halteteil 23 gelagerte Deckel 24 besteht aus einer Deckelwand 31 und am Rand desselben angeordneten Kragenwänden 32, die zusammen einen vorzugsweise umlaufenden Kragen bilden. Der Deckel 24 ist derart an die Querschnittform des Tragrohrs 16 angepasst, dass er in einer Schließstellung die Öffnungen 21 im Bereich der freien Enden 20 verschließt. Die Kragenwände 32 sind hierzu gegenüber der Deckelwand 31 abgewinkelt, im vorliegenden Ausführungsbeispiel um einen Winkel von 90°. In der Schließstellung des Deckels 24 liegen die Kragenwände 32 außenseitig an den Seitenflächen des Tragrohrs 16 an. Wenigstens die Kragenwände 32 können aus einem flexiblen Kunststoff gebildet sein, so dass eine formschlüssige bzw. abdichtende Anlage an der Außenseite des Tragrohrs 16 erleichtert wird.

Ein Teil des Kragens wird durch das Halteteil 23 gebildet. Hierzu ist in den Kragenwänden 32 des Deckels 24 eine Ausnehmung 33 bzw. Ausklinkung vorgesehen, in der das Halteteil 23 in der Schließstellung des Deckels 24 Aufnahme findet. Im Bereich der Ausnehmung 33 ist der Kragen bzw. sind die Kragenwände 32 durch das Halteteil 23 gebildet.

An der Außenseite des Deckels 24 sind weiterhin im Bereich der Kragenwände 32 stegartige Vorsprünge 34 angeformt, die zur Aussteifung des Deckels 24 und als Griffhilfe dienen können. Im Bereich einer seitlichen Kragenwand 32 ist zusätzlich noch eine Grifflasche 35 angeformt, die ebenfalls zum Erfassen des Deckels 24 dienen kann.

Im Bereich der Deckelwand 31 ist im gezeigten Ausführungsbeispiel zudem ein Logo 39 des Herstellers bzw. ein Werbeaufdruck oder dergleichen aufgebracht, beispielsweise ausgeformt.

An der Außenseite (Seitenfläche 26) des Tragrohrs 16 sind Kabel bzw. elektrische Leitungen 36 angeordnet. Die Leitungen 36 dienen zur Verbindung der verschiedenen Bedien-, Anzeige-, Kontrollelemente, Hubwerke 23 bzw. Druckmittelzylinder 18, 19 untereinander. Die Leitungen 36 führen zu einer Steuereinheit 37, die erfindungsgemäß im Tragrohr 16 angeordnet ist.

Bei der Steuereinheit 37 kann es sich in einem einfachen Fall lediglich um einen Schaltkasten bzw. Verteilerkasten handeln, der beispielsweise zur Verdrahtung der einzelnen Komponenten der Hubladebühne 12 dienen kann. Die Steuereinheit 37 kann aber auch elektronische und/oder elektrische Bauteile zur Steuerung und/oder Regelung und/oder Anzeige und/oder Kontrolle von (sämtlichen) Funktionen der Hubladebühne 12 enthalten.

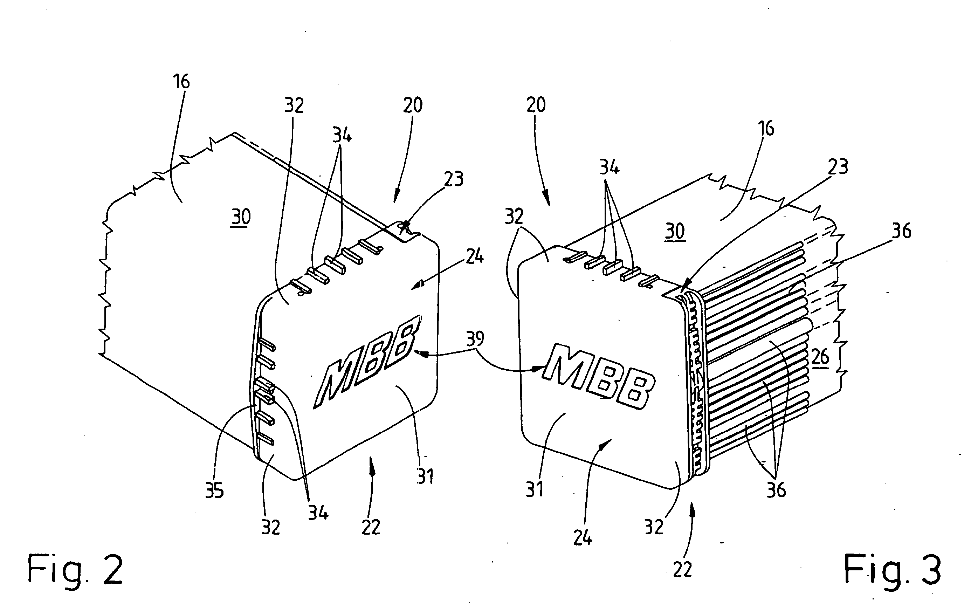

Die Steuereinheit 37 ist an einer Innenseite des Deckels 24 bzw. der Deckelwand 31 angeordnet, derart, dass in einer Schließstellung des Deckels 24 (Fig. 2 bzw. 3) die Steuereinheit 37 im Tragrohr 16 positioniert ist.

Um die an der Außenseite des Tragrohrs 16 verlegten Leitungen 36 mit der Steuereinheit 37 zu verbinden, weist die Dichtkappe 22 eine Kabeldurchführung auf. Diese ist im Bereich des Halteteils 23 ausgebildet. Der Steg 28 des Halteteils 23 weist zu diesem Zweck Ausnehmungen 38 auf. Die Ausnehmungen 38 sind ausgehend von einer Seitenfläche des Stegs 28 eingeformt, als Rillen bzw. Kanäle. Im vorliegenden Ausführungsbeispiel handelt es sich bei der Seitenfläche des Stegs 28 um die der Seitenfläche 26 des Tragrohrs 16 zugewandte Fläche.

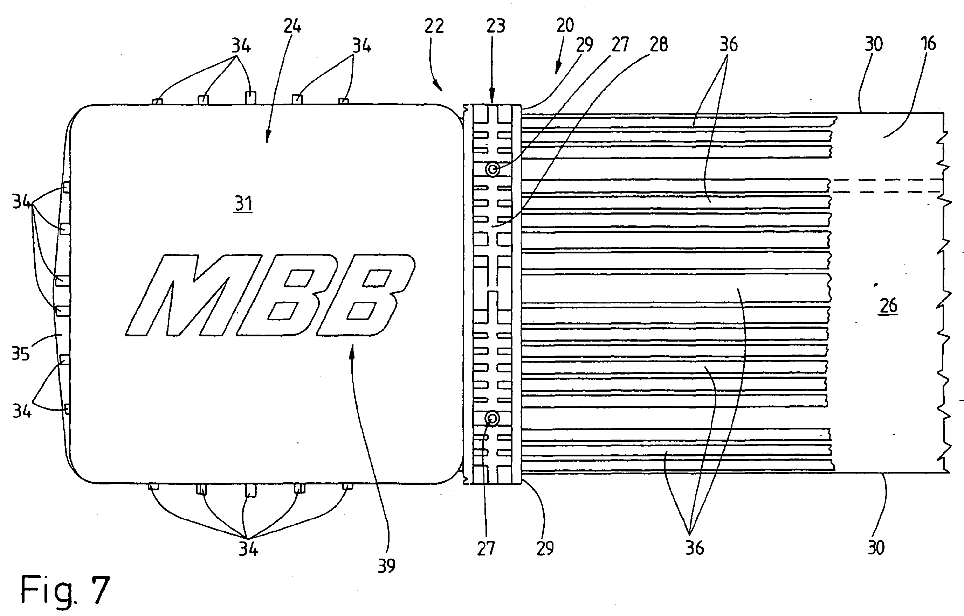

Wie insbesondere Fig. 7 zeigt, sind die Leitungen 36 parallel und mit Abstand voneinander an der Außenseite des Tragrohrs 16 verlegt. Für vorzugsweise jede Leitung 36 ist im Halteteil 23 eine eigene Ausnehmung 38 vorgesehen. Alternativ können aber auch mehrere Leitungen 36 durch eine einzelne Ausnehmung 38 hindurchgeführt werden.

Zur Abdichtung der Kabeldurchführung kann das Halteteil 23 aus einem geeigneten, flexiblen Kunststoff ausgebildet sein. Vorteilhafterweise kann im Bereich der Ausnehmungen 38 ein Material mit einer erhöhten Flexibilität vorhanden sein, so dass auch nicht durch Leitungen 36 belegte Ausnehmungen 38 abgedichtet werden können. Alternativ können auch spezielle Dichtungen eingesetzt werden.

Die durch die Ausnehmungen 38 hindurchgeführten Leitungen 36 verlaufen durch die Ausnehmung 33 bzw. Ausklinkung in den Kragenwänden 32 des Deckels 24 und können auf diese Weise mit der Steuereinheit 37 verbunden werden.

Das Tragrohr 16 bzw. der Deckel 24 weisen eine übereinstimmende, im gezeigten Ausführungsbeispiel im wesentlichen rechteckige bzw. quadratische, Querschnittsform auf. Die erfindungsgemäße Dichtkappe 22 kann natürlich auch an andere Querschnittsformen des Tragrohrs 16 angepasst werden, beispielsweise an kreisförmige bzw. ovale Querschnitte. In den zuletzt genannten beiden Fällen muss die Lage der Scharnierverbindung zwischen Deckel 24 und Halteteil 23 angepasst werden. In diesen Fällen ist die Restverbindung oder dergleichen im Deckel 24 angeordnet und verläuft mit Abstand zum Rand des Deckels 24, so dass dieser zum Verschluss der Öffnung 21 gegen das Tragrohr 16 schwenkbar ist.

## Patentansprüche

1. Hubladebühne zur Anordnung an einer Rückseite eines Fahrzeugs (10), mit einem dem Fahrzeug (10) zugeordnetem Tragrohr (16) zur Lagerung einer Ladeplattform (15) und mit Dichtkappen zum Verschließen von offenen Enden des Tragrohrs (16), **dadurch gekennzeichnet, dass** mindestens eine Dichtkappe (22) aus wenigstens zwei gelenkig, insbesondere scharnierartig, miteinander verbundenen Teilen besteht, wobei ein erstes Teil, insbesondere ein Halteteil (23), am Tragrohr (16) befestigbar ist und eine Durchführung für wenigstens ein Kabel (36) aufweist und wobei das zweite Teil, insbesondere ein Deckel (24), zum Verschluss des vom ersten Teil freigelassenen offenen Endes (20) des Tragrohrs (16) ausgebildet ist.

2. Hubladebühne nach Anspruch 1, **dadurch gekennzeichnet, dass** das erste Teil, insbesondere das Halteteil (23), wenigstens teilweise das Tragrohr (16) umschließend an demselben positionierbar ist, insbesondere im Bereich eines freien Endes (20) des Tragrohrs (16), wobei vorzugsweise das erste Teil bzw. Halteteil (23) am Tragrohr befestigbar (16) ist, insbesondere anschraubbar, anklebbar oder annietbar.

3. Hubladebühne nach einem der vorhergehenden Ansprüche, **dadurch gekennzeichnet, dass** das Halteteil (23) Ausnehmungen (38) und/oder Durchbrüche aufweist zur Durchführung der Kabel (36), vorzugsweise das Halteteil (23) zum dichtenden Abschluss der Kabeldurchführung wenigstens teilweise aus Kunststoff hergestellt ist, insbesondere lediglich im Bereich der Kabeldurchführung.

4. Hubladebühne nach Anspruch 3 oder einem der weiteren Ansprüche, **dadurch gekennzeichnet, dass** Ausnehmungen (38) im Bereich einer Seitenfläche des Halteteils (23) angeordnet sind, die bei Befestigung am Tragrohr (16) demselben zugewandt ist.

5. Hubladebühne nach Anspruch 1 oder einem der weiteren Ansprüche, **dadurch gekennzeichnet, dass** das zweite Teil, insbesondere ein Deckel (24), eine an die Form des Tragrohrs angepasste Gestalt aufweist, wobei vorzugsweise das zweite Teil bzw. der Deckel (24) zum Verschluss eines offenen Endes (20) des Tragrohrs (16) schwenkbar an dem Halteteil (23) befestigt ist.

6. Hubladebühne nach einem der vorhergehenden Ansprüche, **dadurch gekennzeichnet, dass** der Deckel (24) zum abdichtenden Verschluss eines offenen Endes (20) des Tragrohrs (16) aus Kunststoff besteht und/oder der Deckel (24) in einer Schließstellung ein offenes Ende (20) des Tragrohrs (16) außenseitig verschließt.

7. Hubladebühne nach einem der vorhergehenden Ansprüche, **dadurch gekennzeichnet, dass** der Deckel (24) und das Halteteil (23) über eine Restverbindung, insbesondere ein Filmscharnier (25), miteinander verbunden sind.

8. Hubladebühne nach einem der vorhergehenden Ansprüche, **dadurch gekennzeichnet, dass** der Deckel (24) eine Deckelwand (31) und einen an die Deckelwand (31) angeformten, umlaufenden Kragen aufweist, wobei Kragen der in der Schließstellung vorzugsweise vollständig umlaufend am Tragrohr (16) anliegt, wobei vorzugsweise der Kragen in der Schließstellung des Deckels (24) wenigstens teilweise durch das Halteteil (23) gebildet ist.

9. Hubladebühne nach einem der vorhergehenden Ansprüche, **dadurch gekennzeichnet, dass** elektronische Bauteile, insbesondere zur Steuerung von Funktionen der Hubladebühne, derart am Deckel (24) angeordnet sind, dass die elektronischen Bauteile bei Positionierung des Deckels (24) in einer Schließstellung zur Abdeckung eines offenen Endes (20) des Tragrohrs (16) innerhalb des Tragrohrs (16) angeordnet sind.

10. Hubladebühne zur Anordnung an einer Rückseite eines Fahrzeugs (10), mit einem dem Fahrzeug (10) zugeordnetem Tragrohr (16) zur Lagerung einer Ladeplattform (15) nach einem der vorhergehenden Ansprüche, **dadurch gekennzeichnet, dass** eine Steuereinheit (37) im Tragrohr (16) angeordnet ist.

11. Hubladebühne nach einem der vorhergehenden Ansprüche, **dadurch gekennzeichnet, dass** die Steuereinheit (37) im Bereich von freien Enden (20) des Tragrohrs (16) angeordnet ist, vorzugsweise einer Dichtkappe (22) zum Verschließen von offenen Enden (20) des Tragrohrs (16) zugeordnet ist.

12. Hubladebühne nach einem der vorhergehenden Ansprüche, **dadurch gekennzeichnet, dass** die Steuereinheit (37) derart an der Dichtkappe (22), insbesondere an einem Deckel (24) derselben, angeordnet ist, dass die Steuereinheit (37) in einer Schließstellung des Deckels (24), in der ein dem Deckel (24) zugeordnetes freies Ende (20) des Tragrohres (16) durch die Dichtkappe (22) verschlossen ist, innerhalb des Tragrohrs (16) angeordnet ist.

## Claims

1. Loading tailgate for arranging on a rear side of a vehicle (10), having a supporting tube (16) which is assigned to the vehicle (10) and is intended for bearing a loading platform (15), and having sealing caps for closing open ends of the supporting tube (16), **characterized in that** at least one sealing cap (22) comprises at least two parts which are connected to one another in an articulated manner, in particular in a hinge-like manner, it being the case that a first part, in particular a retaining part (23), can be fastened on the supporting tube (16) and has a lead-through for at least one cable (36), and that the second part, in particular a cover (24), is designed for closing the open end (20) of the supporting tube (16), this end being left free by the first part.

2. Loading tailgate according to Claim 1, **characterized in that** the first part, in particular the retaining part (23) can be positioned on the supporting tube (16), in particular in the region of a free end (20) of the supporting tube (16), such that it at least partially encloses the supporting tube (16), it preferably being possible for the first part or retaining part (23) to be fastened (16) on the supporting tube, in particular screwed, adhesively bonded or riveted thereto.

3. Loading tailgate according to one of the preceding claims, **characterized in that** the retaining part (23) has apertures (38) and/or through-passages through which the cable (36) can be led, and preferably the retaining part (23), for sealing off the cable lead-through, is produced, at least in part, from plastic, in particular only in the region of the cable lead-through.

4. Loading tailgate according to Claim 3 or one of the further claims, **characterized in that** apertures (38) are arranged **in that** side surface of the retaining part (23) which, when the latter is fastened on the supporting tube (16), is directed towards the supporting tube.

5. Loading tailgate according to Claim 1 or one of the further claims, **characterized in that** the second part, in particular a cover (24), is configured in adaptation to the shape of the supporting tube, and preferably the second part or the cover (24), for closing an open end (20) of the supporting tube (16), is fastened in a pivotable manner on the retaining part (23).

6. Loading tailgate according to one of the preceding claims, **characterized in that** the cover (24), for sealing off an open end (20) of the supporting tube (16), consists of plastic and/or the cover (24), in a closed position, closes an open end (20) of the supporting tube (16) on the outside.

7. Loading tailgate according to one of the preceding claims, **characterized in that** the cover (24) and the retaining part (23) are connected to one another via a residual connection, in particular a film hinge (25).

8. Loading tailgate according to one of the preceding claims, **characterized in that** the cover (24) has a cover wall (31) and an all-round collar integrally formed on the cover wall (31), it being the case that the collar, in the closed position, butts against the supporting tube (16) preferably all the way round, and that preferably the collar, in the closed position of the cover (24), is formed, at least in part, by the retaining part (23).

9. Loading tailgate according to one of the preceding claims, **characterized in that** electronic components, in particular for controlling functions of the loading tailgate, are arranged on the cover (24) such that, when the cover (24) is placed in a closed position for covering an open end (20) of the supporting tube (16), the electronic components are arranged within the supporting tube (16).

10. Loading tailgate for arranging on a rear side of a vehicle (10), having a supporting tube (16) which is assigned to the vehicle (10) and is intended for bearing a loading platform (15), according to one of the preceding claims, **characterized in that** a control unit (37) is arranged in the supporting tube (16).

11. Loading tailgate according to one of the preceding claims, **characterized in that** the control unit (37) is arranged in the region of free ends (20) of the supporting tube (16), and is preferably assigned to a sealing cap (22) for closing open ends (20) of the supporting tube (16).

12. Loading tailgate according to one of the preceding claims, **characterized in that** the control unit (37) is arranged on the sealing cap (22), in particular on a cover (24) thereof, such that in a closed position of the cover (24), in which a free end (20) of the supporting tube (16), this free end being assigned to the cover (24), is closed by the sealing cap (22), the control unit (37) is arranged within the supporting tube (16).

## Revendications

1. Hayon élévateur destiné à être disposé sur un côté arrière d'un véhicule (10), comprenant un tube porteur (16) associé au véhicule (10) et servant à supporter une plate-forme de chargement (15), et comprenant des capuchons d'étanchéité pour fermer les extrémités ouvertes du tube porteur (16), **caractérisé en ce qu'**au moins un capuchon d'étanchéité (22) se compose d'au moins deux pièces connectées l'une à l'autre de manière articulée, notamment par charnière, une première pièce, notamment une pièce de fixation (23), pouvant être fixée sur le tube porteur (16) et présentant un passage pour au moins un câble (36) et la deuxième pièce, notamment un couvercle (24), étant réalisée pour fermer l'extrémité libre (20) du tube porteur (16) non couverte par la première pièce.

2. Hayon élévateur selon la revendication 1, **caractérisé en ce que** la première pièce, notamment la pièce de fixation (23), peut être positionnée sur le tube porteur (16) au moins en partie en entourant ce dernier, notamment dans la région d'une extrémité libre (20) du tube porteur (16), la première pièce ou pièce de fixation (23) pouvant de préférence être fixée sur le tube porteur (16), notamment par vissage, collage ou rivetage.

3. Hayon élévateur selon l'une quelconque des revendications précédentes, **caractérisé en ce que** la pièce de fixation (23) présente des évidements (38) et/ou des perçages pour permettre le passage des câbles (36), de préférence la pièce de fixation (23) est fabriquée au moins en partie en plastique pour fermer hermétiquement le passage de câbles, notamment seulement dans la région du passage de câbles.

4. Hayon élévateur selon la revendication 3 ou l'une quelconque des revendications précédentes, **caractérisé en ce que** des évidements (38) sont disposés dans la région d'une surface latérale de la pièce de fixation (23) qui est tournée vers le tube porteur (16) lors de la fixation sur ce dernier.

5. Hayon élévateur selon la revendication 1 ou l'une quelconque des revendications précédentes, **caractérisé en ce que** la deuxième pièce, notamment un couvercle (24), présente une forme adaptée à la forme du tube porteur, la deuxième pièce ou le couvercle (24) étant de préférence fixé(e) de manière pivotante sur la pièce de fixation (23) pour fermer une extrémité ouverte (20) du tube porteur (16).

6. Hayon élévateur selon l'une quelconque des revendications précédentes, **caractérisé en ce que** le couvercle (24) pour la fermeture hermétique d'une extrémité ouverte (20) du tube porteur (16) est en plastique et/ou le couvercle (24), dans une position de fermeture, ferme du côté extérieur une extrémité ouverte (20) du tube porteur (16).

7. Hayon élévateur selon l'une quelconque des revendications précédentes, **caractérisé en ce que** le couvercle (24) et la pièce de fixation (23) sont connectés l'un à l'autre par le biais d'une connexion résiduelle, notamment une charnière à film (25).

8. Hayon élévateur selon l'une quelconque des revendications précédentes, **caractérisé en ce que** le couvercle (24) présente une paroi de couvercle (31) et un rebord périphérique façonné sur la paroi de couvercle (31), le rebord s'appliquant dans la position de fermeture de préférence complètement sur la périphérie du tube porteur (16), le rebord étant de préférence formé dans la position de fermeture du couvercle (24) au moins en partie par la pièce de fixation (23).

9. Hayon élévateur selon l'une quelconque des revendications précédentes, **caractérisé en ce que** des composants électroniques, notamment pour commander des fonctions du hayon élévateur, sont disposés sur le couvercle (24) de telle sorte que les composants électroniques, lors du positionnement du couvercle (24) dans une position de fermeture pour recouvrir une extrémité ouverte (20) du tube porteur (16), soient disposés à l'intérieur du tube porteur (16).

10. Hayon élévateur destiné à être disposé sur un côté arrière d'un véhicule (10), comprenant un tube porteur (16) associé au véhicule (10) et servant à supporter une plate-forme de chargement (15) selon l'une quelconque des revendications précédentes, **caractérisé en ce qu'**une unité de commande (37) est disposée dans le tube porteur (16).

11. Hayon élévateur selon l'une quelconque des revendications précédentes, **caractérisé en ce que** l'unité de commande (37) est disposée dans la région d'extrémités libres (20) du tube porteur (16), de préférence est associée à un capuchon d'étanchéité (22) pour fermer des extrémités ouvertes (20) du tube porteur (16).

12. Hayon élévateur selon l'une quelconque des revendications précédentes, **caractérisé en ce que** l'unité de commande (37) est disposée sur le capuchon d'étanchéité (22), notamment sur un couvercle (24) de celui-ci, de telle sorte que l'unité de commande (37) soit disposée à l'intérieur du tube porteur (16), dans une position de fermeture du couvercle (24) dans laquelle une extrémité libre (20) du tube porteur (16) associée au couvercle (24) est fermée par le capuchon d'étanchéité (22).
